# EUROPÄISCHE PATENTANMELDUNG

(11) **EP 3 432 093 A1**
(43) Veröffentlichungstag der Anmeldung: **23.01.2019**
(21) Anmeldenummer: 17182054.1
(22) Anmeldetag: 19.07.2017
(51) Int. Cl.: G05B 17/02, G06N 3/08, G06N 3/04

(54) **VERFAHREN ZUR MODELLIERUNG EINES DYNAMISCHEN SYSTEMS DURCH RECHNERGESTÜTZTES LERNEN VON DATENGETRIEBENEN MODELLEN**

(71) Anmelder: Siemens Aktiengesellschaft, 80333 München (DE)
(72) Erfinder: Grothmann, Ralph, 80796 München (DE)

(57) **Zusammenfassung**

Die Erfindung betrifft ein Verfahren zur Modellierung eines dynamischen Systems durch rechnergestütztes Lernen von datengetriebenen Modellen (NN1, NN2, ..., NNm), wobei das Verhalten des dynamischen Systems durch Trainingsdaten (TD) charakterisiert ist, welche eine Vielzahl von Datensätzen (DS) enthalten, wobei ein jeweiliger Datensatz (DS) einen Eingangsvektor (X) aus einer Anzahl von Eingangsgrößen (x1, x2, ..., xN) mit zugeordneten Eingangswerten und einen Zielvektor (Y) aus einer Anzahl von Zielgrößen (y1, y2, ..., yN) mit zugeordneten Zielwerten umfasst. Erfindungsgemäß wird mittels einer Iteration eine Mehrzahl von datengetriebenen Modellen (NN1, NN2, ..., NNm) gelernt. Im Rahmen der Iteration werden die datengetriebenen Modelle in einem jeweiligen Iterationsschritt (IS) mit zumindest einem neu hinzugenommenen Datensatz (DS') neu gelernt. Dabei wird ein Prädiktionsfehler (ER) berücksichtigt, der ein Maß für die Abweichung zwischen dem oder den Zielvektoren (Y) des zumindest einen hinzugenommenen Datensatzes (DS') und dem oder den Zielvektoren (Y') ist, welche das jeweilige neu gelernte datengetriebene Modell (NN1', NN2', ..., NNm') basierend auf dem oder den Eingangsvektoren (X) des zumindest einen hinzugenommenen Datensatzes (DS') prädiziert. Bei größeren Prädiktionsfehlern (ER) wird das Neulernen des entsprechenden datengetriebenen Modells wieder verworfen.

## Beschreibung

Die Erfindung betrifft ein Verfahren zur Modellierung eines dynamischen Systems durch rechnergestütztes Lernen von datengetriebenen Modellen.

Aus dem Stand der Technik ist es bekannt, dynamische Systeme, d.h. Systeme, welche ein zeitabhängiges Verhalten zeigen, mittels sog. datengetriebener Modelle zu modellieren. Die datengetriebenen Modelle werden dabei mit rechnergestützten Lernverfahren basierend auf bekannten Trainingsdaten gelernt, die das Verhalten des betrachteten dynamischen Systems beschreiben. Die Trainingsdaten umfassen eine Vielzahl von Datensätzen, wobei ein jeweiliger Datensatz einen Eingangsvektor aus einer Anzahl von Eingangsgrößen mit zugeordneten Eingangswerten sowie einen Zielvektor aus einer Anzahl von Zielgrößen mit zugeordneten Zielwerten enthält.

Bei der Modellierung von dynamischen Systemen tritt oftmals das Problem auf, dass sich das betrachtete dynamische System in unterschiedlichen Regimes befinden kann, die durch externe Einflussfaktoren bestimmt sind. Dies kann zur Folge haben, dass je nach Regime der gleiche Eingangsvektor zu unterschiedlichen Zielvektoren führt. Wird beispielsweise ein dynamisches System in der Form eines technischen Systems modelliert, kann dieses technische System für verschiedene Betriebsbereiche unterschiedliches Verhalten zeigen, so dass je nach Betriebsbereich ein anderer Zielwert einer entsprechenden Zielgröße trotz gleicher Eingangswerte des Eingangsvektors erhalten wird.

Herkömmlicherweise werden zur Berücksichtigung unterschiedlicher Regimes bei der Modellierung eines dynamischen Systems separate datengetriebene Modelle zum Lernen dieser verschiedenen Regimes genutzt. Hierzu ist es jedoch erforderlich, dass vorab bekannt ist, zu welchem Regime ein jeweiliger Datensatz der Trainingsdaten gehört, um sicherzustellen, dass ein jeweiliges Modell immer nur mit den Datensätzen des gleichen Regimes gelernt wird.

Aufgabe der Erfindung ist es, ein Verfahren zur Modellierung eines dynamischen Systems durch rechnergestütztes Lernen von datengetriebenen Modellen zu schaffen, bei dem mehrere Regimes des dynamischen Systems gelernt werden können, ohne dass die Datensätze der Trainingsdaten entsprechenden Regimes zugeordnet sind.

Diese Aufgabe wird durch die unabhängigen Patentansprüche gelöst. Weiterbildungen der Erfindung sind in den abhängigen Ansprüchen definiert.

Das erfindungsgemäße Verfahren dient zur Modellierung eines dynamischen Systems durch rechnergestütztes Lernen von datengetriebenen Modellen. Das Verhalten des dynamischen Systems wird durch Trainingsdaten charakterisiert, welche eine Vielzahl von Datensätzen enthalten, wobei ein jeweiliger Datensatz einen Eingangsvektor aus einer Anzahl von Eingangsgrößen (d.h. zumindest einer Eingangsgröße) mit zugeordneten Eingangswerten und einen Zielvektor mit einer Anzahl von Zielgrößen (d.h. zumindest einer Zielgröße) mit zugeordneten Zielwerten umfasst.

Im Rahmen des erfindungsgemäßen Verfahrens wird eine Mehrzahl von datengetriebenen Modellen, welche unterschiedlich initialisiert sind und die Prädiktion von Zielvektoren basierend auf Eingangsvektoren ermöglichen, mittels einer Iteration aus einem oder mehreren Iterationsschritten gelernt. Die datengetriebenen Modelle können dabei unterschiedlich ausgestaltet sein und weiter unten werden Beispiele von solchen Modellen gegeben. Ebenso kann die Initialisierung der datengetriebenen Modelle verschieden ausgestaltet sein. In einer bevorzugten Ausführungsform werden die einzelnen datengetriebenen Modelle zufällig initialisiert.

Im Rahmen des erfindungsgemäßen Verfahrens werden in einem jeweiligen Iterationsschritt die nachfolgend erläuterten Teilschritte a) bis c) durchgeführt.

Im Teilschritt a) wird jedes datengetriebene Modell, das aus dem letzten Iterationsschritt (d.h. aus dem vor dem jeweiligen Iterationsschritt liegenden Iterationsschritt) erhalten wurde oder im Falle des ersten Iterationsschritts dem initialisierten datengetriebenen Modell entspricht, unter Hinzunahme zumindest eines Datensatzes gelernt, der aus den Trainingsdaten ausgewählt ist, wodurch neu gelernte datengetriebene Modelle erhalten werden. Das Lernen im jeweiligen Iterationsschritt erfolgt dabei ausschließlich basierend auf dem zumindest einen ausgewählten bzw. hinzugenommenen Datensatz. In einer bevorzugten Variante wird ein einzelner Datensatz zum Lernen der datengetriebenen Modelle hinzugenommen.

In einem Teilschritt b) wird für jedes datengetriebene Modell ein Prädiktionsfehler ermittelt, der ein Maß für die Abweichung zwischen dem oder den Zielvektoren des zumindest einen hinzugenommenen Datensatzes und dem oder den Zielvektoren ist, welche das jeweilige neu gelernte datengetriebene Modell basierend auf dem oder den Eingangsvektoren des zumindest einen neu hinzugenommenen Datensatzes prädiziert. Im Falle, dass ein einzelner Datensatz hinzugenommen wird, ist der Prädiktionsfehler ein Maß für die Abweichung zwischen dem Zielvektor des hinzugenommenen Datensatzes und dem Zielvektor, den das jeweilige neu gelernte datengetriebene Modell basierend auf dem Eingangsvektor des hinzugenommenen Datensatzes prädiziert.

Je nach Variante kann der Prädiktionsfehler verschieden definiert sein, solange er das obige Maß für die Abweichung widerspiegelt. Nichtsdestotrotz ist der Prädiktionsfehler immer so gewählt, dass ein größeres Maß für die Abweichung zu einem größeren Prädiktionsfehler führt. In einer besonders bevorzugten Ausgestaltung umfasst der Prädiktionsfehler für ein jeweiliges datengetriebenes Modell einen Fehler für jeden hinzugenommenen Datensatz, wobei der Fehler der mittlere quadratische Fehler zwischen den Zielwerten des mit dem jeweiligen datengetriebenen Modell prädizierten Zielvektors und des Zielvektors des jeweiligen hinzugenommenen Datensatzes ist. Der Prädiktionsfehler kann z.B. der Mittelwert der mittleren quadratischen Fehler für alle hinzugenommenen Datensätze sein oder im Falle eines einzelnen hinzugenommenen Datensatzes dem mittleren quadratischen Fehler für diesen Datensatz entsprechen.

In einem Teilschritt c) werden basierend auf einem vorgegebenen Kriterium eines oder mehrere der datengetriebenen Modelle als erste Modelle eingestuft und das oder die restlichen datengetriebenen Modelle aus der Mehrzahl von datengetriebenen Modellen als zweite Modelle eingestuft. Das vorgegebene Kriterium ist dabei derart ausgestaltet, dass jeder Prädiktionsfehler für das oder die ersten Modelle kleiner gleich oder kleiner als jeder Prädiktionsfehler für das oder die zweiten Modelle ist.

Die soeben beschriebene Kategorisierung der datengetriebenen Modelle in erste Modelle und zweite Modelle fließt im Rahmen des nächsten Iterationsschritts ein. Dabei wird ein jeweiliges datengetriebenes Modell, das einem ersten Modell entspricht, im nächsten Iterationsschritt in der Form des jeweiligen neu gelernten datengetriebenen Modells verwendet, wohingegen ein jeweiliges datengetriebenes Modell, das einem zweiten Modell entspricht, im nächsten Iterationsschritt in der Form zu Beginn des jeweiligen Iterationsschritts verwendet wird. Mit anderen Worten werden datengetriebene Modelle mit großen Prädiktionsfehlern nicht mittels des oder der hinzugenommenen Datensätze gelernt.

Die erfindungsgemäße Iteration wird schließlich basierend auf einer Abbruchbedingung abgebrochen, wobei die bei Abbruch vorliegenden datengetriebenen Modelle gespeichert werden und in diesem Sinne das Ergebnis des erfindungsgemäßen Verfahrens darstellen. Diese gespeicherten Modelle können anschließend zur Prädiktion bzw. Prognose von jeweiligen Zielvektoren des dynamischen Systems basierend auf jeweiligen Eingangsvektoren genutzt werden.

Mittels der erfindungsgemäßen Iteration wird durch geeignete Berücksichtigung von Prädiktionsfehlern sichergestellt, dass die einzelnen datengetriebenen Modelle mit unterschiedlichen Datensätzen der Trainingsdaten gelernt werden, so dass die Modelle verschiedene Regimes des dynamischen Systems abbilden können. Dabei müssen die Trainingsdaten nicht die Information beinhalten, zu welchem Regime die einzelnen Datensätze der Trainingsdaten gehören.

Ein Benutzer kann bei der späteren Verwendung der gespeicherten datengetriebenen Modelle erkennen, dass sich das dynamische System in unterschiedlichen Regimes befinden kann. Unterschiedliche Regimes liegen insbesondere dann vor, wenn die einzelnen prädizierten Zielvektoren der unterschiedlich gelernten datengetriebenen Modelle für den gleichen Eingangsvektor stark voneinander abweichen. Gegebenenfalls kann der Benutzer unter Berücksichtigung von Zusatzinformationen feststellen, welcher prädizierte Zielvektor das aktuelle Verhalten des dynamischen Systems korrekt wiedergibt.

Die im erfindungsgemäßen Verfahren verwendete Abbruchbedingung kann verschieden ausgestaltet sein. In einer einfachen Variante ist die Abbruchbedingung dann erfüllt, wenn die Iteration eine vorgegebene Anzahl von Iterationsschritten durchlaufen hat. Ebenso kann die Abbruchbedingung an die Größe der Prädiktionsfehler gekoppelt sein. Zum Beispiel kann die Abbruchbedingung darin bestehen, dass in einem Iterationsschritt oder in mehreren Iterationsschritten hintereinander der kleinste Prädiktionsfehler einen vorbestimmten Schwellwert unterschritten hat.

Wie bereits oben erwähnt, können die datengetriebenen Modelle unterschiedlich ausgestaltet sein. In einer besonders bevorzugten Ausführungsform umfasst die Mehrzahl von datengetriebenen Modellen ein oder mehrere neuronale Netze mit jeweils einer Eingangsschicht, einer oder mehreren versteckten Schichten und einer Ausgangsschicht, wobei die Eingangsschicht den Eingangsvektor repräsentiert und die Ausgangsschicht den Zielvektor repräsentiert. Mit anderen Worten erhält die Eingangsschicht als Eingabe den Eingangsvektor, woraufhin die Ausgangsschicht einen entsprechenden Zielvektor als Ausgabe generiert. Anstatt oder zusätzlich kann in einer weiteren Ausgestaltung des erfindungsgemäßen Verfahrens die Mehrzahl von datengetriebenen Modellen eine oder mehrere Support Vector Machines und/oder einen oder mehrere Regressionsbäume umfassen.

In einer weiteren bevorzugten Ausgestaltung des erfindungsgemäßen Verfahrens umfasst das vorgegebene Kriterium im Teilschritt c) einen vorbestimmten Prozentsatz oder eine vorbestimmte Anzahl, wobei die datengetriebenen Modelle mit den kleinsten Prädiktionsfehlern entsprechend dem vorgegebenen Prozentsatz oder entsprechend der vorgegebenen Anzahl aus der Mehrzahl von datengetriebenen Modellen als erste Modelle eingestuft werden und die restlichen datengetriebenen Modelle als zweite Modelle eingestuft werden.

In einer weiteren Ausgestaltung des erfindungsgemäßen Verfahrens umfasst das vorgegebene Kriterium einen Schwellwert für den Prädiktionsfehler, wobei alle datengetriebenen Modelle, deren Prädiktionsfehler den Schwellwert unterschreitet oder kleiner gleich dem Schwellwert ist, als erste Modelle eingestuft werden und die restlichen datengetriebenen Modelle als zweite Modelle eingestuft werden.

Um sicherzustellen, dass in jedem Iterationsschritt eine Zuweisung zu ersten und zweiten Modellen erfolgt, wird in einer bevorzugten Variante der soeben beschriebenen Ausführungsform das datengetriebene Modell mit dem kleinsten Prädiktionsfehler als erstes Modell eingestuft, falls der Prädiktionsfehler für kein datengetriebenes Modell den Schwellwert unterschreitet oder kleiner gleich dem Schwellwert ist. Die restlichen datengetriebenen Modelle werden weiterhin als zweite Modelle kategorisiert.

In einer weiteren bevorzugten Variante des erfindungsgemäßen Verfahrens entspricht ein jeweiliger Datensatz einem jeweiligen Zeitpunkt, wobei der jeweilige Datensatz den oder die Eingangswerte der Anzahl von Eingangsgrößen des Eingangsvektors zu dem jeweiligen Zeitpunkt sowie den oder die Zielwerte der Anzahl von Zielgrößen des Zielvektors zu dem jeweiligen Zeitpunkt oder gegebenenfalls auch zu einem vergangenen Zeitpunkt oder einem zukünftigen Zeitpunkt umfasst. Mit anderen Worten können mit den datengetriebenen Modellen je nach Ausgestaltung aktuelle Zielwerte, zukünftige Zielwerte und gegebenenfalls auch bereits vergangene Zielwerte prognostiziert werden.

In einer besonders bevorzugten Ausführungsform des erfindungsgemäßen Verfahrens ist das modellierte dynamische System ein technisches System, wobei die Datensätze Zustandsgrößen des technischen Systems sind.

In einer bevorzugten Variante umfasst das technische System eine Gasturbine. Vorzugsweise umfasst der Zielvektor in den jeweiligen Datensätzen dabei als Zielgrößen die Emission von Stickoxiden und/oder ein Brennkammerbrummen. Ferner umfasst der Eingangsvektor in den jeweiligen Datensätzen als Eingangsgrößen vorzugsweise das der Gasturbine zugeführte Verhältnis aus Luft und Gas und/oder eine oder mehrere gemessene Temperaturen und/oder eine oder mehrere gemessene Luftfeuchtigkeiten. Die Temperaturen bzw. Luftfeuchtigkeiten können an verschiedenen Stellen in oder an der Gasturbine erfasst werden.

In einer weiteren bevorzugten Ausgestaltung des erfindungsgemäßen Verfahrens umfasst das technische System einen oder mehrere elektrische Energieverbraucher, wobei in den jeweiligen Datensätzen der Zielvektor als Zielgröße den Verbrauch von elektrischer Energie durch den oder die elektrischen Energieverbraucher umfasst. Vorzugsweise umfasst der Eingangsvektor als Eingangsgrößen kalendarische Informationen und/oder Wetterinformationen.

In einer weiteren Ausgestaltung des erfindungsgemäßen Verfahrens umfasst das technische System einen oder mehrere elektrische Energieerzeuger, wobei in den jeweiligen Datensätzen der Zielvektor als Zielgröße die Menge von elektrischer Energie umfasst, welche durch den oder die elektrischen Energieerzeuger erzeugt wird. Vorzugsweise umfasst der Eingangsvektor als Eingangsgrößen wiederum kalendarische Informationen und/oder Wetterinformationen.

Gegebenenfalls kann das modellierte dynamische System auch die zeitliche Entwicklung eines Preises für elektrische Energie oder für einen Rohstoff repräsentieren. In diesem Fall umfasst der Zielvektor in den jeweiligen Datensätzen als Zielgröße den Preis für elektrische Energie oder für den Rohstoff. Vorzugsweise umfasst der Eingangsvektor als Eingangsgrößen wiederum kalendarische Informationen und/oder Werteinformationen. Mit dieser Variante des erfindungsgemäßen Verfahrens wird somit die Entwicklung eines Preises z.B. auf einer entsprechenden Handelsplattform modelliert.

Die oben genannten kalendarischen Informationen beziehen sich vorzugsweise auf Informationen im Hinblick auf den Wochentag bzw. den entsprechenden Tageszeitpunkt. Die Wetterinformationen beziehen sich insbesondere auf aktuelle bzw. prognostizierte Werte bezüglich Umgebungstemperaturen und/der Sonneneinstrahlung und/oder Windstärke und dergleichen.

Neben dem soeben beschriebenen Verfahren zur Modellierung eines dynamischen Systems betrifft die Erfindung ein Verfahren zur rechnergestützten Prädiktion des Verhaltens eines dynamischen Systems, das mit dem erfindungsgemäßen Verfahren bzw. einer oder mehrerer bevorzugter Varianten des erfindungsgemäßen Verfahrens modelliert ist, wobei das Verfahren zur Modellierung ggf. auch Bestandteil des Prädiktionsverfahrens sein kann. Dabei werden für einen oder mehrere Zeitpunkte jeweils aus dem Eingangsvektor, der für das dynamische System zu einem jeweiligen Zeitpunkt vorliegt, Zielvektoren mit jedem der gespeicherten datengetriebenen Modelle prädiziert. Vorzugsweise werden die prädizierten Zielvektoren über eine Benutzerschnittstelle ausgegeben. Hierüber erhält man Aufschluss, ob sich das dynamische System gegebenenfalls in unterschiedlichen Regimen befinden kann.

In einer bevorzugten Variante des soeben beschriebenen Prädiktionsverfahrens wird für einen jeweiligen Zeitpunkt eine Häufigkeitsverteilung der prädizierten Zielvektoren berechnet und mittels eines Clusterverfahrens werden ein oder mehrere Cluster von Zielvektoren mit ähnlichen Werten von Zielgrößen sowie den Clustern zugeordnete Clusterzentren basierend auf der Häufigkeitsverteilung ermittelt. Vorzugsweise werden die Informationen über die Cluster mit den Werten der Clusterzentren durch eine Benutzerschnittstelle ausgegeben. Als Clusterverfahren kann dabei ein beliebiges, aus dem Stand der Technik bekanntes Verfahren eingesetzt werden, wie z.B. die k-Means-Clusterung. Durch die Nachschaltung eines Clusterverfahrens kann die Information gewonnen werden, in wie vielen unterschiedlichen Regimes sich das dynamische System befinden kann.

In einer weiteren bevorzugten Ausführungsform wird automatisch bzw. rechnergestützt basierend auf einem vorgegebenen Auswahlkriterium aus den Zielvektoren, die für einen jeweiligen Zeitpunkt mit den gespeicherten datengetriebenen Modellen prädiziert werden, einer der Zielvektoren als der Zielvektor ausgewählt, der das Verhalten des dynamischen Systems zu dem jeweiligen Zeitpunkt korrekt wiedergibt. Auf diese Weise werden in dem Verfahren weitere Informationen berücksichtigt, aus denen abgeleitet werden kann, in welchem Regime sich das dynamische System zum jeweiligen Zeitpunkt befindet.

In einer bevorzugten Variante berücksichtigt das vorgegebene Auswahlkriterium Zielvektoren zu früheren Zeitpunkten und/oder eine Zustandsgröße des dynamischen Systems, welche nicht in den Datensätzen enthalten ist.

Neben dem oben beschriebenen Verfahren betrifft die Erfindung ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

Die Erfindung umfasst ferner ein Computerprogramm mit einem Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

Ein Ausführungsbeispiel der Erfindung wird nachfolgend anhand der beigefügten Figuren detailliert beschrieben.

Es zeigen:
- Fig. 1: ein Ensemble aus mehreren neuronalen Netzen, welche in einer Ausführungsform der Erfindung zur Modellierung eines technischen Systems verwendet werden;
- Fig. 2: eine schematische Darstellung eines Iterationsschritts, der im Rahmen einer Iteration basierend auf den neuronalen Netzen der Fig. 1 durchgeführt wird.

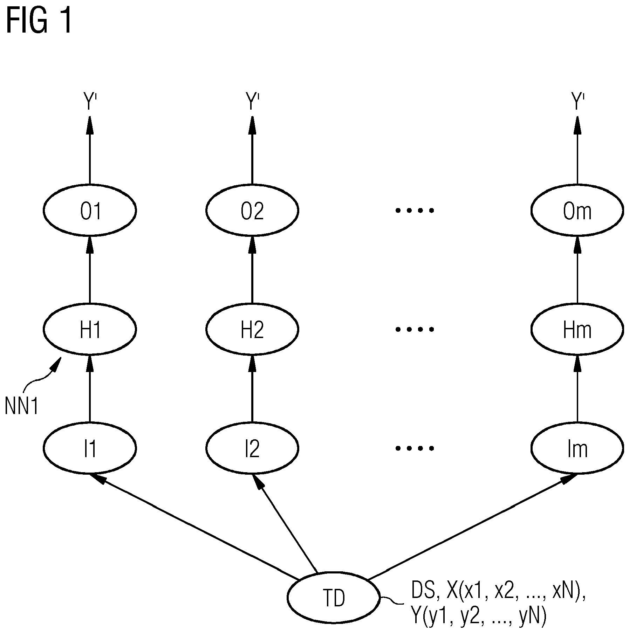

Nachfolgend wird eine Ausführungsform des erfindungsgemäßen Verfahrens beschrieben, bei der ein dynamisches System durch rechnergestütztes Lernen von neuronalen Netzen modelliert wird. Die jeweiligen neuronalen Netze stellen dabei Beispiele von datengetriebenen Modellen im Sinne der Ansprüche dar. Gemäß Fig. 1 werden zum Lernen mehrere neuronale Netze NN1, NN2, ..., NNm verwendet. Ein jeweiliges neuronales Netz umfasst dabei eine Eingangsschicht, eine versteckte Schicht sowie eine Ausgangsschicht. Jede der Schichten enthält eine Vielzahl von künstlichen Neuronen, um hierüber basierend auf einem Eingangsvektor einen entsprechenden Zielvektor des dynamischen Systems zu prädizieren. Die Eingangsschicht des neuronalen Netzes NN1 ist mit I1, die versteckte Schicht mit H1 und die Ausgangsschicht mit O1 bezeichnet. Analog ist die Eingangsschicht des neuronalen Netzes NN2 mit 12, die versteckte Schicht mit H2 und die Ausgangsschicht mit 02 bezeichnet. In gleicher Weise werden die Schichten der weiteren Netze indiziert, so dass die Eingangsschicht des letzten neuronalen Netzes NNm mit Im, die versteckte Schicht mit Hm und die Ausgangsschicht mit Om bezeichnet ist.

Zum Lernen der neuronalen Netze werden Trainingsdaten TD in der Form einer Vielzahl von Datensätzen DS verwendet. Ein jeweiliger Datensatz enthält dabei einen Eingangsvektor X, der wiederum aus mehreren Eingangsgrößen x1, x2, ..., xN besteht. Ferner enthält ein jeweiliger Datensatz einen Zielvektor Y, der wiederum einzelne Zielgrößen y1, y2, ..., yN umfasst. Es existieren dabei viele solcher Datensätzen, die sich in den Werten der Eingangsgrößen und/oder Zielgrößen unterscheiden. Die einzelnen Datensätze wurden aus dem betrachteten dynamischen System zu vorbestimmten Zeitpunkten gewonnen. Ist das dynamische System beispielsweise ein technisches System, repräsentieren die Eingangsgrößen und Zielgrößen der einzelnen Datensätze Betriebsgrößen des technischen Systems.

Nach dem Durchführen des im Folgenden beschriebenen Lernens der einzelnen neuronalen Netze kann jedes der Netze einen Zielvektor Y' als Ausgabe der jeweiligen Ausgangsschicht basierend auf einem beliebigen Eingangsvektor X prädizieren, der eine Eingabe der jeweiligen Eingangsschicht darstellt. Auf diese Weise modellieren die jeweiligen gelernten neuronalen Netze das Verhalten des betrachteten dynamischen Systems. Das erfindungsgemäße Verfahren beruht auf der Erkenntnis, dass ein dynamisches System oftmals zwischen verschiedenen Regimen wechselt, wobei das System in den verschiedenen Regimen ein unterschiedliches Verhalten zeigt. Beispielsweise können im Rahmen des Betriebs eines technischen Systems gleiche Werte von Eingangsgrößen zu unterschiedlichen Werten von Zielgrößen führen, falls sich das technische System in unterschiedlichen Betriebsbereichen befindet, was beispielsweise aus früheren Eingangsvektoren abgeleitet werden kann.

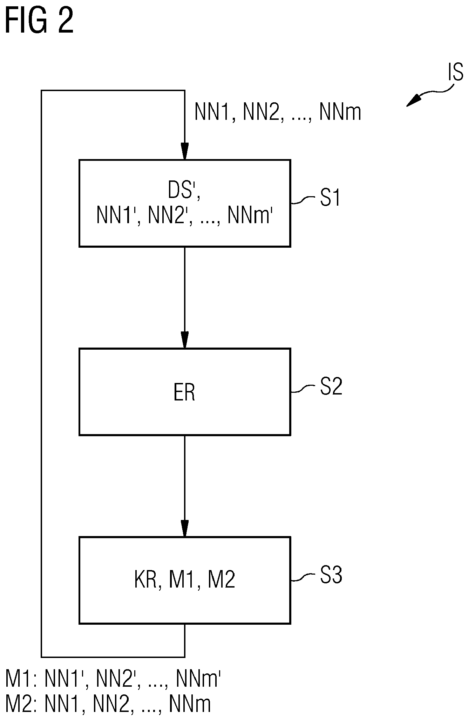

Um das Verhalten von dynamischen Systemen in verschiedenen Regimen zu berücksichtigen, werden die in Fig. 1 gezeigten mehreren neuronalen Netze gelernt. Zu Beginn des Lernens unterscheiden sich die neuronalen Netze darin, dass sie unterschiedlich initialisiert sind. Das rechnergestützte Lernen der neuronalen Netze wird basierend auf einer Iteration durchgeführt, welche nachfolgend anhand von Fig. 2 beschrieben wird. Diese Figur zeigt dabei einen aktuellen Iterationsschritt IS, der die Teilschritte S1, S2 und S3 umfasst.

Im aktuellen Iterationsschritt IS werden die aus dem vorhergehenden Iterationsschritt gewonnenen neuronalen Netze NN1, NN2, ..., NNm mit ihren entsprechenden Charakteristika verwendet. Im ersten Iterationsschritt sind die neuronalen Netze die unterschiedlich initialisierten Netze. Im Teilschritt S1 des jeweiligen Iterationsschritts wird aus der Vielzahl von Datensätzen DS ein einzelner Datensatz DS' ausgewählt. Je nach Ausgestaltung kann die Auswahl verschieden erfolgen. Beispielsweise kann der Datensatz DS' zufällig ausgewählt werden. Dabei kann zugelassen werden, dass ein ausgewählter Datensatz auch mehrmals im Rahmen der Iteration zur Verwendung kommt. Ebenso besteht die Möglichkeit, dass ein ausgewählter Datensatz nur einmalig im Rahmen der Iteration verwendet werden darf.

Die einzelnen neuronalen Netze NN1, NN2, ..., NNm werden nunmehr basierend auf dem ausgewählten Datensatz DS' gelernt, woraus neu gelernte neuronale Netze NN1', NN2', ..., NNm' erhalten werden. Das Lernen läuft dabei basierend auf an sich bekannten Methoden ab. Vorzugsweise wird ein Lernen mittels Fehlerrückpropagation (englisch: Error Backpropagation) durchgeführt.

In dem Teilschritt S2 wird für jedes neu gelernte neuronale Netz NN1' bis NNm' ein Prädiktionsfehler ER ermittelt. Hierzu wird mit jedem der neuronalen Netze der Zielvektor Y' basierend auf dem Eingangsvektor des ausgewählten Datensatzes DS' prädiziert. Der Prädiktionsfehler stellt dabei den mittleren quadratischen Fehler zwischen den Zielwerten des prädizierten Zielvektors Y' und den entsprechenden Zielwerten des Zielvektors Y des ausgewählten Datensatzes DS' dar. Als Ergebnis des Teilschritts S2 erhält man somit eine Vielzahl von Prädiktionsfehlern ER für die einzelnen neu gelernten neuronalen Netze NN1', ..., NNm'.

In dem nachfolgenden Teilschritt S3 werden die einzelnen neuronalen Netze dann in Modelle M1 und M2 klassifiziert. Hierzu wird ein vorgegebenes Kriterium KR verwendet. In der Ausführungsform der Fig. 2 spezifiziert dieses Kriterium einen vorbestimmten Prozentsatz an neuronalen Netzen der Gesamtanzahl der Netze NN1 bis NNm. Vorzugsweise liegt dieser Prozentsatz bei 50% oder weniger. Gemäß dem Kriterium KR werden die neuronalen Netze in aufsteigenden Reihenfolgen ihrer Prädiktionsfehler als Modelle M1 kategorisiert, bis der vorbestimmte Prozentsatz erreicht ist. Die restlichen neuronalen Netze werden dann als Modelle M2 kategorisiert.

Die Kategorisierung gemäß den Modellen M1 und M2 wird dann im nächsten Iterationsschritt verwendet. Dabei werden beim Lernen im nächsten Iterationsschritt für alle neuronalen Netze, die Modellen M1 entsprechen, die neu gelernten Netzstrukturen NN1', NN2', ..., NNm verwendet, welche im Teilschritt S1 gelernt wurden. Demgegenüber werden die neuronalen Netze, welche als Modelle M2 eingestuft werden, im nächsten Iterationsschritt ohne Berücksichtigung des Lernens gemäß Teilschritt S1 des vorhergehenden Iterationsschritts genutzt. Mit anderen Worten wird der Lernschritt S1 für diese neuronalen Netze verworfen. Man macht sich hierbei die Erkenntnis zunutze, dass sich das dynamische System in unterschiedlichen Regimen befinden kann und die einzelnen neuronalen Netze deshalb getrennt für die unterschiedlichen Regime gelernt werden sollten. Dies wird dadurch berücksichtigt, dass in einem jeweiligen Iterationsschritt ein Lernen des entsprechenden neuronalen Netzes nur dann durchgeführt wird, wenn das Lernen zu einem kleinen Prädiktionsfehler führt.

Die anhand von Fig. 2 beschriebene Iteration wird basierend auf einer vorgegebenen Abbruchbedingung beendet, wobei die Abbruchbedingung je nach Ausführungsform unterschiedlich ausgestaltet sein kann. In einem einfachen Fall kann die Abbruchbedingung durch eine vorbestimmte Maximalanzahl an Iterationen gegeben sein. Ebenso kann die Abbruchbedingung beispielsweise darin bestehen, dass der im jeweiligen Iterationsschritt auftretende kleinste Prädiktionsfehler einmalig oder in mehreren Iterationsschritten hintereinander einen vorbestimmten Schwellwert unterschreitet.

Nach Beendigung der Iteration erhält man unterschiedlich gelernte neuronale Netze, die das Ergebnis der hier beschriebenen Ausführungsform darstellen. Diese gelernten neuronalen Netze können dann zur Prognose bzw. Prädiktion von Zielvektoren basierend auf Werten von neuen Eingangsvektoren verwendet werden. Die prädizierten Werte der einzelnen gelernten Netze für den gleichen Eingangsvektor werden dabei über eine geeignete Benutzerschnittstelle ausgegeben. Ein Benutzer bekommt hierüber Aufschluss, ob sich ein dynamisches System unter Umständen in verschiedenen Regimes befinden kann, was er daran erkennt, dass die einzelnen prädizierten Zielvektoren stark voneinander abweichen.

Gegebenenfalls kann im Rahmen der Prädiktion der Zielvektoren für den gleichen Eingangsvektor auch ein rechnergestütztes Clusterverfahren zum Einsatz kommen. Dabei werden mit an sich bekannten Methoden (z.B. mittels der k-Means-Clusterung) ein oder mehrere Cluster von Zielvektoren mit entsprechenden Clusterzentren bestimmt und über eine Benutzerschnittstelle ausgegeben. Ein Benutzer kann dann erkennen, ob mehrere Regimes für das Verhalten des dynamischen Systems vorliegen. Gegebenenfalls kann auch automatisch unter Verwendung von weiteren Kriterien ermittelt werden, in welchem Regime sich das dynamische System aktuell befindet. Der entsprechende Zielvektor dieses Regimes stellt dann den Prognosewert dar. Zur Bestimmung des Regimes können beispielsweise zu früheren Zeitpunkten aufgetretene Eingangsvektoren mit zugeordneten Zielvektoren oder auch weitere, das Verhalten des dynamischen Systems beschreibende Größen genutzt werden, welche nicht beim Lernen der neuronalen Netze eingeflossen sind.

Das erfindungsgemäße Verfahren kann zur Modellierung von beliebigen dynamischen Systemen genutzt werden. Ein bevorzugter Anwendungsfall ist die Vorhersage von Zustandsgrößen von technischen Systemen, wie z.B. Gasturbinen. Ebenso können mit dem Verfahren auch Preise für elektrische Energie oder Rohstoffe oder gegebenenfalls auch Mengen an erzeugter elektrischer Energie bzw. Mengen an Energieverbräuchen in Stromnetzen vorhergesagt werden.

Die im Vorangegangenen beschriebene Ausführungsform der Erfindung weist eine Reihe von Vorteilen auf. Insbesondere wird das Verhalten eines dynamischen Systems rechnergestützt basierend auf datengetriebenen Modellen unter Berücksichtigung der Tatsache modelliert, dass sich das dynamische System gegebenenfalls in verschiedenen Regimes befinden kann. Dabei muss jedoch nicht bekannt sein, zu welchen Regimes die einzelnen Datensätze der Trainingsdaten zum Lernen der datengetriebenen Modelle gehören. Vielmehr werden unterschiedliche Regimes über ein geeignetes iteratives Lernen von mehreren datengetriebenen Modellen berücksichtigt.

## Patentansprüche

1. Verfahren zur Modellierung eines dynamischen Systems durch rechnergestütztes Lernen von datengetriebenen Modellen (NN1, NN2, ..., NNm), wobei das Verhalten des dynamischen Systems durch Trainingsdaten (TD) charakterisiert ist, welche eine Vielzahl von Datensätzen (DS) enthalten, wobei ein jeweiliger Datensatz (DS) einen Eingangsvektor (X) aus einer Anzahl von Eingangsgrößen (x1, x2, ..., xN) mit zugeordneten Eingangswerten und einen Zielvektor (Y) aus einer Anzahl von Zielgrößen (y1, y2, ..., yN) mit zugeordneten Zielwerten umfasst, wobei eine Mehrzahl von datengetriebenen Modellen (NN1, NN2, ..., NNm), welche unterschiedlich initialisiert sind und die Prädiktion von Zielvektoren (Y') basierend auf Eingangsvektoren (X) ermöglichen, mittels einer Iteration aus einem oder mehreren Iterationsschritten (IS) gelernt wird, wobei in einem jeweiligen Iterationsschritt (IS) folgende Teilschritte durchgeführt werden:
a) jedes datengetriebene Modell (NN1, NN2, ..., NNm), das aus dem letzten Iterationsschritt (IS) erhalten wurde oder im Falle des ersten Iterationsschritts (IS) dem initialisierten datengetriebenen Modell entspricht, wird unter Hinzunahme zumindest eines Datensatzes (DS') gelernt, der aus den Trainingsdaten (TD) ausgewählt ist, wodurch neu gelernte datengetriebene Modelle (NN1', NN2', ..., NNm') erhalten werden;
b) für jedes datengetriebene Modell (NN1, NN2, ..., NNm) wird ein Prädiktionsfehler (ER) ermittelt, der ein Maß für die Abweichung zwischen dem oder den Zielvektoren (Y) des zumindest einen hinzugenommenen Datensatzes (DS') und dem oder den Zielvektoren (Y') ist, welche das jeweilige neu gelernte datengetriebene Modell (NN1', NN2', ..., NNm') basierend auf dem oder den Eingangsvektoren (X) des zumindest einen hinzugenommenen Datensatzes (DS') prädiziert;
c) basierend auf einem vorgegebenen Kriterium (KR) werden eines oder mehrere der datengetriebenen Modelle (NN1, NN2, ..., NNm) als erste Modelle (M1) eingestuft und das oder die restlichen datengetriebenen Modelle (NN1, NN2, ..., NNm) als zweite Modelle (M2) eingestuft, wobei das vorgegebene Kriterium (KR) derart ausgestaltet ist, dass jeder Prädiktionsfehler (ER) für das oder die ersten Modelle (M1) kleiner gleich oder kleiner als jeder Prädiktionsfehler (ER) für das oder die zweiten Modelle (M2) ist, wobei ein jeweiliges datengetriebenes Modell (NN1, NN2, ..., NNm), das einem ersten Modell (M1) entspricht, im nächsten Iterationsschritt in der Form des jeweiligen neu gelernten datengetriebenen Modells (NN1', NN2', ..., NNm') verwendet wird und ein jeweiliges datengetriebenes Modell (NN1, NN2, ..., NNm), das einem zweiten Modell (M2) entspricht, im nächsten Iterationsschritt in der Form zu Beginn des jeweiligen Iterationsschritts (IS) verwendet wird;
wobei die Iteration basierend auf einer Abbruchbedingung abgebrochen wird, wobei die bei Abbruch vorliegenden datengetriebenen Modelle (NN1, NN2, ..., NNm) gespeichert werden.

2. Verfahren nach Anspruch 1, **dadurch gekennzeichnet, dass** die Mehrzahl von datengetriebenen Modellen (NN1, NN2, ..., NNm) ein oder mehrere neuronale Netze mit jeweils einer Eingangsschicht (I1, 12, ..., Im), einer oder mehreren versteckten Schichten (H1, H2, ..., Hm) und einer Ausgangsschicht (O1, 02, ..., Om) umfasst, wobei die Eingangsschicht (I1, 12, ..., Im) den Eingangsvektor (X) repräsentiert und die Ausgangsschicht den Zielvektor (Y) repräsentiert.

3. Verfahren nach Anspruch 1 oder 2, **dadurch gekennzeichnet, dass** die Mehrzahl von datengetriebenen Modellen (NN1, NN2, ..., NNm) eine oder mehrere Support Vector Machines und/oder einen oder mehrere Regressionsbäume umfasst.

4. Verfahren nach einem der vorhergehenden Ansprüche, **dadurch gekennzeichnet, dass** der Prädiktionsfehler (ER) für ein jeweiliges datengetriebenes Modell (NN1, NN2, ..., NNm) einen Fehler für jeden hinzugenommenen Datensatzes (DS') umfasst, wobei der Fehler der mittlere quadratische Fehler zwischen den Zielwerten des prädizierten Zielvektors (Y') und des Zielvektors (Y) des jeweiligen hinzugenommenen Datensatzes (DS') ist.

5. Verfahren nach einem der vorhergehenden Ansprüche, **dadurch gekennzeichnet, dass** das vorgegebene Kriterium (KR) einen vorbestimmten Prozentsatz oder eine vorbestimmte Anzahl umfasst, wobei die datengetriebenen Modelle (NN1, NN2, ..., NNm) mit den kleinsten Prädiktionsfehlern (ER) entsprechend dem vorgegebenen Prozentsatz oder entsprechend der vorgegebenen Anzahl aus der Mehrzahl von datengetriebenen Modelle (NN1, NN2, ..., NNm) als erste Modelle (M1) eingestuft werden und die restlichen datengetriebenen Modelle (NN1, NN2, ..., NNm) als zweite Modelle (M2) eingestuft werden.

6. Verfahren nach einem der vorhergehenden Ansprüche, **dadurch gekennzeichnet, dass** das vorgegebene Kriterium (KR) einen Schwellwert für den Prädiktionsfehler (ER) umfasst, wobei alle datengetriebenen Modelle (NN1, NN2, ..., NNm), deren Prädiktionsfehler (ER) den Schellwert unterschreitet oder kleiner gleich dem Schellwert ist, als erste Modelle (M1) eingestuft werden und die restlichen datengetriebenen Modelle (NN1, NN2, ..., NNm) als zweite Modelle (M2) eingestuft werden.

7. Verfahren nach Anspruch 6, **dadurch gekennzeichnet, dass** im Falle, dass der Prädiktionsfehler (ER) für kein datengetriebenes Modell (NN1, NN2, ..., NNm) den Schwellwert unterschreitet oder kleiner gleich dem Schellwert ist, das datengetriebene Modell (NN1, NN2, ..., NNm) mit dem kleinsten Prädiktionsfehler (ER) als erstes Modell (M1) eingestuft wird.

8. Verfahren nach einem der vorhergehenden Ansprüche, **dadurch gekennzeichnet, dass** ein jeweiliger Datensatz (DS) einem jeweiligen Zeitpunkt entspricht, wobei der jeweilige Datensatz (DS) den oder die Eingangswerte der Anzahl von Eingangsgrößen (x1, x2, ..., xN) des Eingangsvektors (X) zu dem jeweiligen Zeitpunkt sowie den oder die Zielwerte der Anzahl von Zielgrößen (y1, y2, ..., yN) des Zielvektors (Y) zu dem jeweiligen Zeitpunkt oder einem vergangenen Zeitpunkt oder einem zukünftigen Zeitpunkt umfasst.

9. Verfahren nach einem der vorhergehenden Ansprüche, **dadurch gekennzeichnet, dass** das dynamische System ein technisches System ist, wobei die Datensätze (DS) Zustandsgrößen des technischen Systems sind.

10. Verfahren nach Anspruch 9, **dadurch gekennzeichnet, dass** das technische System eine Gasturbine umfasst, wobei in den jeweiligen Datensätzen (DS) der Zielvektor (Y) als Zielgrößen (y1, y2, ..., yN) vorzugsweise die Emission von Stickoxiden und/oder ein Brennkammerbrummen umfasst und/oder wobei der Eingangsvektor (X) als Eingangsgrößen (x1, x2, ..., xN) vorzugsweise das der Gasturbine zugeführte Verhältnis aus Luft und Gas und/oder eine oder mehrere gemessene Temperaturen und/oder eine oder mehrere gemessene Luftfeuchtigkeiten umfasst.

11. Verfahren nach Anspruch 9 oder 10, **dadurch gekennzeichnet, dass** das technische System einen oder mehrere elektrische Energieverbraucher umfasst, wobei in den jeweiligen Datensätzen (DS) der Zielvektor (Y) als Zielgröße (y1, y2, ..., yN) den Verbrauch von elektrischer Energie durch den oder die elektrischen Energieverbraucher umfasst, wobei der Eingangsvektor (X) als Eingangsgrößen (x1, x2, ..., xN) vorzugsweise kalendarische Informationen und/oder Wetterinformationen umfasst.

12. Verfahren nach einem der Ansprüche 9 bis 11, **dadurch gekennzeichnet, dass** das technische System einen oder mehrere elektrische Energieerzeuger umfasst, wobei in den jeweiligen Datensätzen (DS) der Zielvektor (Y) als Zielgröße (y1, y2, ..., yN) die Menge von elektrischer Energie umfasst, welche durch den oder die elektrischen Energieerzeuger erzeugt wird, wobei der Eingangsvektor (X) als Eingangsgrößen (y1, y2, ..., yN) vorzugsweise kalendarische Informationen und/oder Wetterinformationen umfasst.

13. Verfahren nach einem der vorhergehenden Ansprüche, **dadurch gekennzeichnet, dass** das dynamische System die zeitliche Entwicklung eines Preises für elektrische Energie oder für einen Rohstoff repräsentiert, wobei in den jeweiligen Datensätzen (DS) der Zielvektor (Y) als Zielgröße (y1, y2, ..., yN) den Preis für elektrische Energie oder für den Rohstoff umfasst, wobei der Eingangsvektor (X) als Eingangsgrößen (x1, x2, ..., xN) vorzugsweise kalendarische Informationen und/oder Wetterinformationen umfasst.

14. Verfahren zur rechnergestützten Prädiktion des Verhaltens eines dynamischen Systems, welches mit einem Verfahren nach einem der vorhergehenden Ansprüche modelliert ist, wobei für eine oder mehrere Zeitpunkte jeweils aus dem Eingangsvektor (X), der für das dynamische System zu dem jeweiligen Zeitpunkt vorliegt, Zielvektoren (Y') mit jedem der gespeicherten datengetriebenen Modelle (NN1, NN2, ..., NNm) prädiziert werden.

15. Verfahren nach Anspruch 14, **dadurch gekennzeichnet, dass** für einen jeweiligen Zeitpunkt eine Häufigkeitsverteilung der prädizierten Zielvektoren (Y') bestimmt wird und mittels eines Clusterverfahrens ein oder mehrere Cluster von Zielvektoren (Y) mit ähnlichen Werten von Zielgrößen (y1, y2, ..., yN) sowie den Clustern zugeordnete Clusterzentren basierend auf der Häufigkeitsverteilung ermittelt werden.

16. Verfahren nach Anspruch 14 oder 15, **dadurch gekennzeichnet, dass** basierend auf einem vorgegebenen Auswahlkriterium aus den Zielvektoren (Y'), die für einen jeweiligen Zeitpunkt mit den gespeicherten datengetriebenen Modellen (NN1, NN2, ..., NNm) prädiziert werden, einer der Zielvektoren (Y) als der Zielvektor ausgewählt wird, der das Verhalten des dynamischen System zu dem jeweiligen Zeitpunkt korrekt wiedergibt.

17. Verfahren nach Anspruch 16, **dadurch gekennzeichnet, dass** das vorgegebene Auswahlkriterium Zielvektoren (Y) zu früheren Zeitpunkten und/oder eine Zustandsgröße des dynamischen Systems berücksichtigt, welche nicht in den Datensätzen (DS) enthalten ist.

18. Computerprogrammprodukt mit einem auf einem maschinenlesbaren Träger gespeicherten Programmcode zur Durchführung eines Verfahrens nach einem der vorhergehenden Ansprüche, wenn der Programmcode auf einem Computer ausgeführt wird.

19. Computerprogramm mit einem Programmcode zur Durchführung eines Verfahrens nach einem der Ansprüche 1 bis 17, wenn der Programmcode auf einem Computer ausgeführt wird.
